# EUROPÄISCHE PATENTSCHRIFT

(11) **EP 3 344 431 B1**
(45) Veröffentlichungstag und Bekanntmachung des Hinweises auf die Patenterteilung: **21.08.2019**
(21) Anmeldenummer: 16759778.0
(22) Anmeldetag: 01.09.2016
(51) Int. Cl.: B29C 45/14, F15B 15/10

(54) **DRUCKMITTELAGGREGAT, MIT EINEM DURCH SPRITZGIESSEN HERGESTELLTEN GEHÄUSE AUS KUNSTSTOFF SOWIE VERFAHREN ZU SEINER HERSTELLUNG**
PRESSURE-MEDIUM UNIT, HAVING A HOUSING PRODUCED BY INJECTION MOLDING AND COMPOSED OF PLASTIC, AND METHOD FOR PRODUCING SAID PRESSURE-MEDIUM UNIT
UNITÉ À FLUIDE SOUS PRESSION COMPORTANT UN BOÎTIER EN PLASTIQUE FABRIQUÉ PAR MOULAGE PAR INJECTION ET PROCÉDÉ POUR SA FABRICATION

(30) Priorität: 04.09.2015 DE 102015114799
(43) Veröffentlichungstag der Anmeldung: 11.07.2018
(73) Patentinhaber: KNORR-BREMSE Systeme für Nutzfahrzeuge GmbH, 80809 München (DE)
(72) Erfinder: NEMETH, Huba, 1116 Budapest (HU); SZUCS, Gábor, 6000 Kecskemét (HU); BOEHLER, Vincent, 14100 Saint Desir (FR); HERICHER, Stéphane, 14670 Basseneville (FR); MLINÁRCSEK, Csaba, 1165 Budapest (HU)
(86) Internationale Anmeldenummer: PCT/EP2016/070611
(87) Internationale Veröffentlichungsnummer: WO 2017/037171

(56) Entgegenhaltungen:
- EP-A2- 1 154 138
- DE-A1- 3 026 596
- DE-A1-102012 210 485
- US-A1- 2001 029 994
- US-A1- 2007 107 779
- US-A1- 2009 295 026

## Beschreibung

Die Erfindung betrifft ein als pneumatischer Bremszylinder ausgebildetes Druckmittelaggregat, sowie von einem Verfahren zu seiner Herstellung, gemäß den Oberbegriffen der Ansprüche 1 und 12.

Das Einsatzgebiet der Erfindung erstreckt sich daher auf mit Druckluft als Druckmittel betriebene Druckmittelaggregate in Form von pneumatischen Bremszylindern. Derartige Bremszylinder weisen gewöhnlich Anschlussbuchsen zum Anschluss von Druckmittelleitungen oder Druckmittelrohren aus Kunststoff auf. Zur Montage der Anschlussbuchse ist das Gehäuse des Druckmittelaggregats mit einer passenden Grundbohrung versehen, deren Durchmesser auf den Außendurchmesser der Anschlussbuchse abgestimmt ist.

Ein gattungsgemäßer pneumatischer Bremszylinder ist beispielsweise aus DE 30 26 596 A1 bekannt. Dort ist die Anschlussbuchse in einer Durchgangsöffnung eines aus Kunststoff spritzgegossenen Deckels eines als pneumatischer Bremszylinder ausgebildeten Membranzylinders eingepresst.

Gehäuse von Bremszylindern, in welche solche Anschlussbuchsen eingepresst werden, werden aus Festigkeitsgründen oft aus hoch festen z.B. glasfaserverstärkten Kunststoffen spritzgegossen. Wird eine Anschlussbuchse in eine korrespondierende Grundbohrung eines solchen spritzgegossenen Gehäuses eingepresst, so tritt das Problem auf, dass in das Gehäuse Pressspannungen eingebracht werden, welche bei den vorherrschend geringen Wandstärken der Gehäuse zu Rissbildungen oder zum Bruch des Gehäuses führen können. Denn derart hoch feste Kunststoffe besitzen nur eine geringe Dehnungsfähigkeit.

In EP 1 371 856 A2 ist ein Druckmittelaggregat offenbart, an dessen Gehäuse eine Anschlussbuchse in eine korrespondierende Grundbohrung eingebracht ist. Die Befestigung erfolgt hier nicht durch Einpressen, sondern über mindestens eine im Wandbereich der Grundbohrung vorgesehene Ausnehmung, die nach Art einer formschlüssigen Schnappverbindung, mit mindestens einer hakenartigen Anformung an der die Grundbohrung druckdicht eingepassten Anschlussbuchse zusammenwirkt. Nachteilig hierbei ist jedoch, dass bei dieser Lösung die Befestigung der Anschlussbuchse lediglich über zwei einander gegenüberliegende Durchbrüche im Gehäuse als formschlüssige Verbindungsstellen erfolgt.

Der Erfindung liegt demgegenüber die Aufgabe zugrunde, eine Anschlussbuchse derart in dem Gehäuse eines Bremszylinders zu befestigen, dass einerseits eine hohe Haltekraft der Anschlussbuchse in der Gehäusewandung gewährleistet ist und andererseits kritische Spannungen im Gehäuse des Druckmittelaggregats vermieden werden. Weiterhin soll auch ein Verfahren zur Herstellung eines solchen Bremszylinders bereitgestellt werden.

Diese Aufgabe wird erfindungsgemäß durch die Merkmale von der nebengeordneten Ansprüche 1 und 12 gelöst.

### Offenbarung der Erfindung

Die Erfindung geht aus von einem als pneumatischer Bremszylinder ausgebildeten Druckmittelaggregat, mit einem durch Spritzgießen hergestellten Gehäuse aus Kunststoff, in dessen Gehäusewandung mindestens eine Anschlussbuchse mit einer Durchgangsöffnung befestigt ist, durch welche eine Zu- und/oder Abfuhr von Druckmittel in oder aus dem Inneren des Gehäuses erfolgt, wobei die Anschlussbuchse aus wenigstens einem Metall besteht, und wobei die Anschlussbuchse zur lösbaren Befestigung eines das Druckmittel führenden Anschlussstutzens einer Schlauch - oder Rohrleitung ausgebildet ist.

Um eine hohe Verschleißbeständigkeit, eine hohe Festigkeit und Steifigkeit im Sinne einer hohen Funktionszuverlässigkeit im Hinblick auf wiederholte Verbindungs- und Lösevorgänge des Anschlussstutzens in Bezug zur Anschlussbuchse zu gewährleisten besteht die Anschlussbuchse daher aus wenigstens einem Metall oder aus einer Metalllegierung.

Bei dem erfindungsgemäßen pneumatischen Bremszylinder bzw. bei dem Verfahren zu seiner Herstellung ist oder wird beim Spritzgießen des Gehäuses die Anschlussbuchse mit Ausnahme der Durchgangsöffnung zumindest teilweise in die Gehäusewandung eingespritzt. Mit anderen Worten wird bereits bei der Herstellung des Gehäuses und im Rahmen des Spitzgussvorgangs in einem einzigen Arbeitsschritt das Gehäuse aus Kunststoff spritzgegossen und gleichzeitig die Anschlussbuchse in die Gehäusewandung zumindest teilweise eingespritzt, wobei zumindest die Durchgangsöffnung der Anschlussbuchse nicht vom Spritzmaterial bedeckt bzw. freigelassen wird, um eine ungehinderte und bestimmungsgemäße Zu- bzw. Abfuhr von Druckmittel durch die Durchgangsöffnung hindurch zu gewährleisten.

Das Herstellverfahren, von dem die Erfindung ausgeht, beinhaltend wenigstens den Schritt des Spritzgießens des Gehäuses aus Kunststoff in einem Spritzgusswerkzeug. Erfindungsgemäß wird dann die mindestens eine Anschlussbuchse an der für sie vorgesehenen Stelle in dem Spritzgusswerkzeug positioniert und beim nachfolgenden Spritzgießen des Gehäuses die mindestens eine Anschlussbuchse in einem einzigen Arbeitsschritt mit Ausnahme der Durchgangsöffnung zumindest teilweise in die Gehäusewandung eingespritzt.

Unter einem zumindest teilweise Einspritzen wird insbesondere ein Einspritzen verstanden, bei welchem wenigstens ein Teil der axialen Erstreckung der Anschlussbuchse in Richtung von deren Mittelachse gesehen in die Gehäusewandung eingespritzt ist. Dabei kann beispielsweise noch ein Teil der Anschlussbuchse insbesondere aus der äußeren Fläche der Gehäusewandung herausragen. Alternativ kann die Anschlussbuchse entlang ihrer gesamten axialen Erstreckung in die Gehäusewandung eingespritzt sein. Entscheidend ist lediglich, dass kein Kunststoff in die Durchgangsöffnung gespritzt wird, damit diese noch bestimmungsgemäß arbeiten kann. Daher ist eine äußere Umfangsfläche der Anschlussbuchse mit Ausnahme der Durchgangsöffnung teilweise oder vollständig in der Gehäusewandung eingespritzt.

Durch die vorstehend genannten Maßnahmen kommt es zu einem Stoffschluss zwischen der radial äußeren Umfangsfläche der Anschlussbuchse und der Gehäusewandung, welcher eine hohe Haltekraft der Anschlussbuchse in der Gehäusewandung gewährleistet, ohne dass hierdurch etwa die Gehäusewandung schädigende Spannungen entstehen.

Durch die in den Unteransprüchen aufgeführten Maßnahmen sind vorteilhafte Weiterbildungen und Verbesserungen der in Anspruch 1 angegebenen Erfindung möglich.

Besonders bevorzugt kann die Anschlussbuchse zur lösbaren Befestigung des das Druckmittel führenden Anschlussstutzens insbesondere nach Art eines Push-In-Fittings ausgebildet sein. Dabei sind Gewinde-, Steck- oder Rastverbindungen denkbar.

Zur Abdichtung der lösbaren Anschlussstutzen-Anschlussbuchse-Verbindung kann zwischen einem nach radial außen ragenden Kragen des Anschlussstutzens und einer äußeren Fläche der Gehäusewandung oder einer Stirnfläche der Anschlussbuchse wenigstens ein Dichtungselement angeordnet sein. Dabei ist das beispielsweise durch einen elastischen Dichtring gebildete Dichtelement zwischen den Kragen und die äußere Fläche der Gehäusewandung bzw. der Stirnfläche unter axialer Vorspannung gehalten, was sich günstig auf die Dichtwirkung auswirkt.

Gemäß einer besonders zu bevorzugenden Ausführungsform weist die Anschlussbuchse einen Hülsenteil und einen vom Hülsenteil nach radial außen weg ragenden Kragenteil auf, wobei bevorzugt zumindest der Kragenteil vollständig in die Gehäusewand durch den Spritzvorgang eingegossen ist. Der Kragenteil sorgt dann insbesondere für eine gute Verankerung der Anschlussbuchse in der Gehäusewandung auch bevorzugt im Hinblick auf Belastungen senkrecht zur Ebene des Kragenteils wie sie z.B. beim axialen Einsetzen oder Einschrauben eines Anschlussstutzens in die Anschlussbuchse auftreten.

Zum Zwecke einer Verdrehsicherung der Anschlussbuchse gegenüber der Gehäusewandung kann gemäß einer fortbildenden Ausführungsform der Kragenteil eine von einer rotationssymmetrischen Fläche abweichende radial äußere Umfangsfläche aufweisen. Dies kann beispielsweise dadurch realisiert sein, dass der Kragenteil eine im Querschnitt gesehen polygonale radial äußere Umfangsfläche aufweist, beispielsweise einen sechseckförmigen Querschnitt. Alternativ oder zusätzlich könnte die Verdrehsicherung auch dadurch realisiert sein, dass der Kragenteil wenigstens eine quer verlaufende Durchgangsöffnung aufweist, welche von dem Material der Gehäusewandung durchsetzt ist.

Eine Verdrehsicherung ist insbesondere dann von Vorteil, wenn die Anschlussbuchse in ihrer Durchgangsöffnung ein Innengewinde aufweist, in welches dann ein Außengewinde eines Anschlussstutzens eingeschraubt wird, wobei die Anschlussbuchse drehbelastet wird.

Wie oben beschrieben, kann die Anschlussbuchse entlang ihrer gesamten axialen Erstreckung in die Gehäusewandung eingespritzt sein. Dann erstreckt sich der Hülsenteil im Wesentlichen von einer inneren Fläche bis zu einer äußeren Fläche der Gehäusewandung.

Gemäß einer weiteren Ausführungsform oder zusätzlich zu der oben beschriebenen Ausführungsform kann zum Zwecke einer Verdrehsicherung der Anschlussbuchse gegenüber der Gehäusewandung eine radial äußere Umfangsfläche der Anschlussbuchse im Querschnitt gesehen eine von einer rotationssymmetrischen Fläche abweichende Form aufweisen. Dann ist kein Kragenteil vorhanden und der Hülsenteil bzw. die radial äußere Umfangsfläche hat beispielsweise einen polygonalen Querschnitt.

Besonders bevorzugt dient die Durchgangsöffnung der Anschlussbuchse dann zum Be- und/oder Entlüften einer Bremskammer im Inneren des Bremszylinders.

Weitere die Erfindung verbessernde Maßnahmen werden nachstehend gemeinsam mit der Beschreibung eines Ausführungsbeispiels der Erfindung anhand der Zeichnung näher dargestellt.

In der Ausführungsbeispiele der Erfindung darstellenden Zeichnung zeigt
- Fig.1: einen schematischen Schaltplan einer bevorzugten Ausführungsform eines pneumatischen Betriebsbremszylinders gemäß dem Stand der Technik, der eine Anschlussbuchse zum Be- und Entlüften einer Bremskammer aufweist;
- Fig.2: eine ausschnittsweise Querschnittsdarstellung einer Gehäusewandung eines pneumatischen Bremszylinders gemäß einer bevorzugten Ausführungsform der Erfindung mit einer in die Gehäusewandung durch einen Spritzgussvorgang eingespritzten Anschlussbuchse;
- Fig.3A/B: perspektivische und vergrößerte Einzeldarstellung von Anschlussbuchsen;
- Fig.4: eine ausschnittsweise Querschnittsdarstellung der Gehäusewandung des Druckmittelaggregats von Fig.2, mit einem in die Anschlussbuchse gesteckten Anschlussstutzen.

### Beschreibung der Ausführungsbeispiele

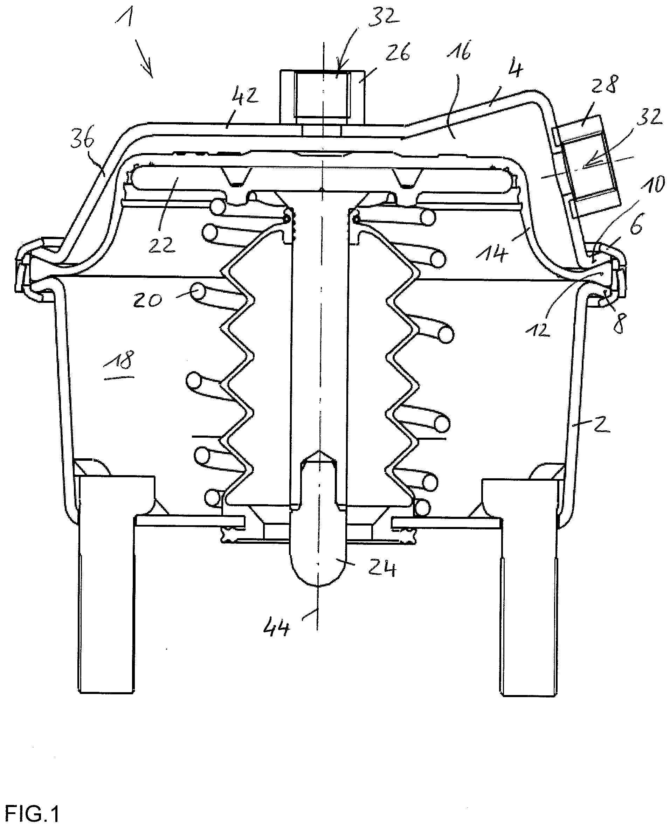

In **Fig. 1** ist ein pneumatischer Betriebsbremszylinder 1 als bevorzugte Ausführungsform der Erfindung im Querschnitt gezeigt. Der Betriebsbremszylinder 1 ist insofern Teil einer pneumatischen oder elektro-pneumatischen Betriebsbremseinrichtung eines Fahrzeugs, insbesondere eines schweren Nutzfahrzeugs.

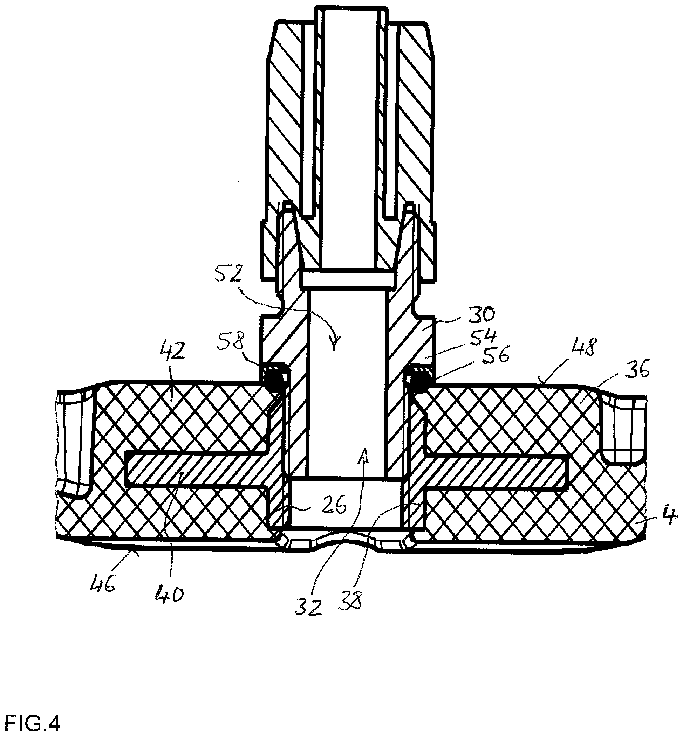

Der Betriebsbremszylinder 1 weist zwei Gehäuseteile 2, 4 aus tiefgezogenem Stahlblech auf, welche beispielsweise mit Hilfe eines nach radial außen weisende Ränder 8, 10 der Gehäuseteile übergreifenden Spannrings 6 miteinander verspannt sind. Der Spannring 6 ist beispielsweise über die Ränder 8, 10 der Gehäuseteile 2, 4 gebördelt, indem er als zunächst zylindrischer Ring durch den Axialdruck, der sich aus einer Relativbewegung von Bördelwerkzeugen z.B. in Form eines Stempel und einer Matrix ergibt, plastisch verformt wird. Zwischen den Rändern 8, 10 der Gehäuseteile 2, 4 ist durch den Spannring 6 weiterhin ein Rand 12 einer Membrane 14 eingespannt, welche eine be- und entlüftbare Bremskammer 16 von einer Federkammer 18 dichtend trennt, in welcher ein gegen die Membrane 14 durch die Wirkung einer Druckfeder 20 gedrängter Federteller 22 aufgenommen ist, an welchem eine Betriebsbremskolbenstange 24 befestigt ist. Die Membrane 14 dichtet dann die be- und entlüftbare Bremskammer 16 gegenüber der Federkammer 18 ab. Die Betriebsbremskolbenstange 24 ragt durch eine Durchgangsöffnung des in Fig.1 unteren und ersten Gehäuseteils 2, um einen Bremsmechanismus der Betriebsbremse des Fahrzeugs zu betätigen, z.B. den Bremsmechanismus einer Scheibenbremse. Das in Fig.1 obere und zweite Gehäuseteil 4 begrenzt zusammen mit der Membrane 14 die Bremskammer 16, welche mittels z.B. hier zweier Anschlussbuchsen 26, 28 be- und entlüftbar ist. Die Anschlussbuchsen 26, 28 dienen zur lösbaren Aufnahme von komplementär geformten und in den Figuren 1 bis 3 nicht aber in Fig.4 gezeigten Anschlussstutzen 30, an welchen Druckluftleitungen angeschlossen sind, durch welche Druckluft in die Bremskammer 16 zu- und von dieser auch abführbar ist. Die Anschlussbuchsen, eine erste Anschlussbuchse 26 und eine zweite Anschlussbuchse 28 sind jeweils hülsenförmig ausgebildet und weisen jeweils eine zentrale axiale Durchgangsöffnung 32 auf, durch welche die Druckluft strömen kann. Beim Stand der Technik sind an den Stellen, an welchen die Anschlussbuchsen 26, 28 am zweiten Gehäuseteil 4 im Bereich der Bremskammer 16 befestigt sind, zwei Grundbohrungen 34 vorhanden, an deren äußeren Rändern die Anschlussbuchsen 26, 28 außen angeschweißt sind. Wenn daher die Bremskammer 16 beispielsweise über eine an die erste Anschlussbuchse 26 angeschlossene Druckluftleitung belüftet wird, so wirkt eine Druckkraft auf die Membrane 14, welche durch den Federteller 22 auf die Betriebsbremskolbenstange 24 auf den Bremsmechanismus in Bremszuspannrichtung übertragen wird. Die Betriebsbremskolbenstange 24 bewegt sich dann gegen die Wirkung der Druckfeder 20 aus dem in Fig.1 unteren ersten Gehäuseteil 2 heraus und spannt die Betriebsbremse zu.

Wird hingegen die Bremskammer 16 über eine z.B. an die zweite Anschlussbuchse 28 angeschlossene Druckluftleitung entlüftet, so bewirkt die Druckfeder 20, dass sich der Federteller 22 in Richtung Bremskammer 16 bewegt, wobei die Betriebsbremskolbenstange 24 sich dann aus dem in Fig.1 unteren ersten Gehäuseteil 2 heraus bewegt, um die Betriebsbremse zu lösen.

Bei dem Betriebsbremszylinder 1 des Stands der Technik bestehen die Gehäuseteile 2, 4 daher aus tiefgezogenem Stahlblech und die Anschlussbuchsen 26, 28 sind außen an den Rädern der Grundbohrungen 34 des zweiten Gehäuseteils 4 durch Verschweißen befestigt.

Im Unterschied zu dem in Fig.1 gezeigten Betriebsbremszylinder 1 des Stands der Technik ist bei einem Betriebsbremszylinder 1 als bevorzugte Ausführungsform eines Druckmittelaggregats gemäß der Erfindung zumindest das zweite Gehäuseteil 4, an welchem die Anschlussbuchsen 26, 28 befestigt sind, aus Kunststoff spritzgegossen bzw. bildet einen Spritzgussformling aus Kunststoff.

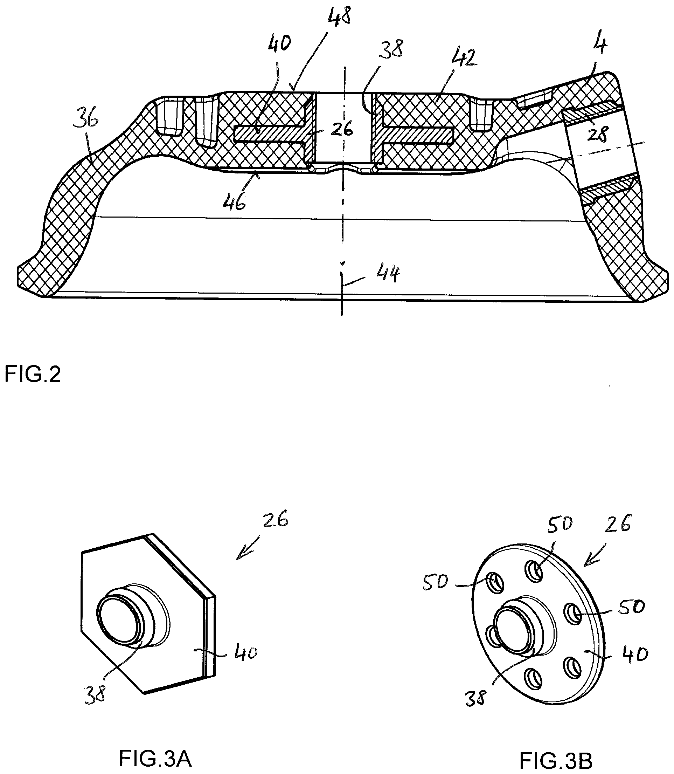

In **Fig.2** ist ausschnittsweise eine Gehäusewandung 36 des zweiten Gehäuseteils 4 gezeigt, an welchem die hier beispielsweise ebenfalls zwei Anschlussbuchsen 26, 28 angeordnet bzw. befestigt sind. Wie das zweite Gehäuseteil 4 so kann auch das erste Gehäuseteil 2 aus Kunststoff spritzgegossen sein. Bei dem Kunststoff kann es sich um ein faserverstärktes Polykarbonat handeln.

Im Unterschied zum Stand der Technik sind die Anschlussbuchsen 26, 28 in einem einzigen Arbeitsschritt gleich beim Urformen des zweiten Gehäuseteils 4 in die Gehäusewandung 36 eingespritzt worden, so dass sie mit der Gehäusewandung 36 wenigstens stoffschlüssig verbunden sind.

Außer der Herstellung der Gehäuseteile 2, 4 als Spritzgussformlinge und dem Einspritzen der Anschlussbuchsen 26, 28 in die Gehäusewandung 34 des zweiten Gehäuseteils 4 ist der Aufbau und die Funktionsweise des Betriebsbremszylinders 1 als bevorzugte Ausführungsform eines Druckmittelaggregats gemäß der Erfindung identisch mit dem in Fig.1 gezeigten Betriebsbremszylinder 1 des Stands der Technik. Die dortige Beschreibung des Betriebsbremszylinders 1 gilt daher mit den eben genannten Ausnahmen daher auch für den Betriebsbremszylinder 1 gemäß der Erfindung.

Bei der Ausführungsform von Fig.2 weist beispielsweise die erste Anschlussbuchse 26 einen Hülsenteil 38 und einen vom Hülsenteil 38 nach radial außen weg ragenden, beispielsweise ringplattenförmigen Kragenteil 40 auf, wobei bevorzugt zumindest der Kragenteil 40 vollständig in die Gehäusewandung 36 durch den Spritzvorgang eingegossen ist. Der Kragenteil 40 ist beispielsweise im Wesentlichen mittig bezogen auf die axiale Erstreckung des Hülsenteils 38 am Hülsenteil 38 angeordnet.

Die erste Anschlussbuchse 26 ist wegen der radialen Ausdehnung aufgrund des Kragenteils 40 bevorzugt zentral in einen Boden 42 des zweiten Gehäuseteils 4 eingespritzt, etwa koaxial mit einer Mittelachse 44 des Betriebsbremszylinders 1. Die zweite Anschlussbuchse 38 ist indes in eine seitliche Auskragung des zweiten Gehäuseteils 4 bei dessen Urformung eingespritzt und ist beispielsweise hülsenförmig ausgebildet, ohne jedoch einen Kragenteil 40 aufzuweisen.

Es ist klar, dass anstatt zweier Anschlussbuchsen 26, 28 auch nur eine einzige Anschlussbuchse an dem zweiten Gehäuseteil 4 vorgesehen sein kann, welches zudem an einer beliebigen Stelle des zweiten Gehäuseteils 4 angeordnet ist, jedoch stets eine Druckluftverbindung in die Bremskammer 16 gewährleisten muss.

Der Hülsenteil 38 der ersten Anschlussbuchse 26 erstreckt sich bevorzugt von einer inneren, zur Bremskammer 16 weisenden Fläche 46 der Gehäusewandung 36 des zweiten Gehäuseteils 4 bis zu einer äußeren Fläche 48 dieser Gehäusewandung 36, welche zur Atmosphäre weist. Alternativ könnte der Hülsenteil 38 auch länger oder kürzer ausfallen. Ebenso erstreckt sich die zweite Anschlussbuchse 28 bevorzugt von der inneren, zur Bremskammer weisenden Fläche 46 der Gehäusewandung 36 des zweiten Gehäuseteils 4 bis zur äußeren Fläche 48 dieser Gehäusewandung 36. Daher sind die von den jeweiligen Durchgangsöffnungen 32 abweichenden Flächen beider Anschlussbuchsen 26, 28 bevorzugt vollständig in die Gehäusewandung 36 des zweiten Gehäuseteils 4 eingespritzt bzw. von dem die Gehäusewandung 36 bildenden Kunststoff umspritzt oder ummantelt.

Bei dem Spritzgussvorgang werden die bevorzugt aus Metall bestehenden Anschlussbuchsen 26, 28 zunächst in dem Spritzgusswerkzeug an den für sie vorgesehenen Stellen der noch nicht existierenden Gehäusewandung 36 positioniert. Nachfolgend wird die Gehäusewandung 36 durch Spritzgießen in dem Spritzgusswerkzeug hergestellt, wobei die Anschlussbuchsen 26, 28 mit Ausnahme ihrer Durchgangsöffnungen 32 in die Gehäusewandung eingespritzt werden. Zum Freilassen der Durchgangsöffnungen 32 sind in dem Spritzgusswerkzeug beispielsweise entsprechende Kerne vorgesehen.

**Fig.3A** zeigt die erste Anschlussbuchse 26 in Einzeldarstellung, welche aus dem Hülsenteil 38 und dem Kragenteil 40 besteht, in einer bevorzugten Ausführungsform. Dort ist der Kragenteil 40 im Querschnitt gesehen beispielsweise polygonförmig und insbesondere sechseckig. Die Polygonform, die ja in die Gehäusewandung 36 eingespritzt ist, bildet dann eine Verdrehsicherung der ersten Anschlussbuchse 26 gegenüber der Gehäusewandung 36, weil dann unterschiedlich ausgerichtete gerade Umfangsflächen vorhanden sind, welche sich in der Gehäusewandung 36 abstützen können.

Alternativ oder zusätzlich könnte die Verdrehsicherung auch gemäß der Ausführungsform von **Fig.3B** einer ersten Anschlussbuchse 26 dadurch realisiert sein, dass der Kragenteil 40 quer verlaufende Durchgangsöffnungen 50 aufweist, welche dann von dem Material der Gehäusewandung 36 beim Spritzgießen unter Ausbildung eines Formschlusses durchsetzt werden.

Jedoch könnte bei einer Anschlussbuchse auch keine solche Verdrehsicherung vorgesehen sein, wie anhand der zweiten Anschlussbuchse 28 in Fig.2 veranschaulicht ist, welche lediglich hülsenförmig und daher im Querschnitt gesehen zylindrisch ist. Der durch den Spritzvorgang zustande gekommene Stoffschluss zwischen der radial äußeren Umfangsfläche der zweiten Anschlussbuchse 28 und der Gehäusewandung 36 muss dann zur Aufnahme von Drehbelastungen ausreichend sein.

In **Fig.4** ist nun die Situation dargestellt, in welcher ein z.B. mit einem Außengewinde versehener Anschlussstutzen 30 in die erste Anschlussbuchse 26 eingeschraubt ist. Der Anschlussstutzen 30 weist dann eine mit der Durchgangsöffnung 32 der ersten Anschlussbuchse koaxiale Durchgangsöffnung 52 auf, um eine Druckluftverbindung zwischen der Bremskammer 16 und einer hier nicht gezeigten, an den Anschlussstutzen angeschlossenen Druckluftleitung zu ermöglichen.

Weiterhin können die Anschlussbuchsen 26, 28 zur lösbaren Befestigung von das Druckmittel führenden Anschlussstutzen 30 insbesondere nach Art von Push-In-Fittingen ausgebildet sein. Allgemein sind Gewinde-, Steck- oder Rastverbindungen zwischen den Anschlussbuchsen 26, 28 und den zugeordneten Anschlussstutzen 30 denkbar.

Wie Fig.4 außerdem zeigt, kann zur Abdichtung der lösbaren Anschlussstutzen-Anschlussbuchse-Verbindung zwischen einem nach radial außen ragenden Kragen 54 des Anschlussstutzens 30 und der äußeren Fläche 48 der Gehäusewandung 36 oder auch einer Stirnfläche der ersten Anschlussbuchse 26 ein Dichtungselement 56 angeordnet sein. Dabei ist das beispielsweise durch einen elastischen Dichtring gebildete Dichtungselement 56 zwischen den Kragen 54 und die äußere Fläche 48 der Gehäusewandung 36 bzw. der Stirnfläche unter axialer Vorspannung gehalten, was sich günstig auf die Dichtwirkung auswirkt. Zur Lagefixierung des Dichtungselements 56 z.B. aus einem ringförmigen Elastomer kann ein Rückhaltering 58 mit L-förmigen Querschnitt vorgesehen sein.

Die Erfindung ist indes nicht auf eine Anwendung bei einem Betriebsbremszylinder 1 beschränkt, sondern kann bei jeglicher Art von Druckmittelaggregat, bei welchem Druckmittel, insbesondere auch Hydraulikflüssigkeit über eine Anschlussbuchse, insbesondere über eine Anschlussbuchsen-Anschlussstutzen-Verbindung in das Innere eines Gehäuse hinein oder aus dem Inneren des Gehäuses herausbefördert wird, angewendet werden. Denkbar für eine solche Anwendung sind insbesondere auch pneumatische Federspeicherbremszylinder, bei welchen zum Zuspannen einer Federspeicherbremse eine Federspeicherbremskammer entlüftet und zum Bremslösen belüftet wird.

### Bezugszeichenliste

- 1: Betriebsbremszylinder
- 2: erstes Gehäuseteil
- 4: zweites Gehäuseteil
- 6: Spannring
- 8: Rand
- 10: Rand
- 12: Rand
- 14: Membrane
- 16: Bremskammer
- 18: Federkammer
- 20: Druckfeder
- 22: Federteller
- 24: Betriebsbremskolbenstange
- 26: erste Anschlussbuchse
- 28: zweite Anschlussbuchse
- 30: Anschlussstutzen
- 32: Durchgangsöffnung
- 34: Grundbohrungen
- 36: Gehäusewandung
- 38: Hülsenteil
- 40: Kragenteil
- 42: Boden
- 44: Mittelachse
- 46: innere Fläche
- 48: äußere Fläche
- 50: Durchgangsöffnung
- 52: Durchgangsöffnung
- 54: Kragen
- 56: Richtungselement
- 58: Rückhaltering

## Patentansprüche

1. Als pneumatischer Bremszylinder ausgebildetes Druckmittelaggregat, mit einem durch Spritzgießen hergestellten Gehäuse (2, 4) aus Kunststoff, in dessen Gehäusewandung (36) mindestens eine Anschlussbuchse (26, 28) mit einer Durchgangsöffnung (32) befestigt ist, durch welche eine Zu- und/oder Abfuhr von Druckmittel in oder aus dem Inneren (16) des Gehäuses (2, 4) erfolgt, wobei die Anschlussbuchse (26, 28) aus wenigstens einem Metall besteht, und wobei die Anschlussbuchse (26, 28) zur lösbaren Befestigung eines das Druckmittel führenden Anschlussstutzens (30) einer Schlauch - oder Rohrleitung ausgebildet ist, **dadurch gekennzeichnet, dass** in einem einzigen Arbeitsschritt beim Spritzgießen des Gehäuses (2, 4) die Anschlussbuchse (26, 28) mit Ausnahme der Durchgangsöffnung (32) zumindest teilweise in die Gehäusewandung (36) eingespritzt ist.

2. Bremszylinder nach Anspruch 1, **dadurch gekennzeichnet, dass** die Anschlussbuchse (26, 28) zur lösbaren Befestigung des das Druckmittel führenden Anschlussstutzens (30) nach Art eines Push-In-Fittings ausgebildet ist.

3. Bremszylinder nach Anspruch 1 oder 2, **dadurch gekennzeichnet, dass** zwischen einem nach radial außen ragenden Kragen (54) des Anschlussstutzens (30) und einer äußeren Fläche (48) der Gehäusewandung (36) oder einer Stirnfläche der Anschlussbuchse (26, 28) wenigstens ein Dichtungselement (56) angeordnet ist.

4. Bremszylinder nach einem der vorhergehenden Ansprüche, **dadurch gekennzeichnet, dass** die Anschlussbuchse (26) einen Hülsenteil (38) und einen vom Hülsenteil (38) nach radial außen weg ragenden Kragenteil (40) aufweist, wobei zumindest der Kragenteil (40) vollständig in die Gehäusewand (36) eingegossen ist.

5. Bremszylinder nach Anspruch 4, **dadurch gekennzeichnet, dass** zum Zwecke einer Verdrehsicherung der Anschlussbuchse (26) gegenüber der Gehäusewandung (36) der Kragenteil (40) eine von einer rotationssymmetrischen Fläche abweichende radial äußere Umfangsfläche aufweist.

6. Bremszylinder nach Anspruch 5, **dadurch gekennzeichnet, dass** zum Zwecke einer Verdrehsicherung der Anschlussbuchse (26) gegenüber der Gehäusewandung (36) der Kragenteil (40) eine im Querschnitt gesehen polygonale radial äußere Umfangsfläche aufweist.

7. Bremszylinder nach einem der Ansprüche 4 bis 6, **dadurch gekennzeichnet, dass** zum Zwecke einer Verdrehsicherung der Anschlussbuchse (26) gegenüber der Gehäusewandung (36) der Kragenteil (40) wenigstens eine quer verlaufende Durchgangsöffnung (50) aufweist, welche von dem Material der Gehäusewandung (36) durchsetzt ist.

8. Bremszylinder nach einem der Ansprüche 4 bis 7, **dadurch gekennzeichnet, dass** sich der Hülsenteil (38) im Wesentlichen von einer inneren Fläche (46) bis zu einer äußeren Fläche (48) der Gehäusewandung (36) erstreckt.

9. Bremszylinder nach einem der vorhergehenden Ansprüche, **dadurch gekennzeichnet, dass** zum Zwecke einer Verdrehsicherung der Anschlussbuchse (26, 28) gegenüber der Gehäusewandung (36) eine radial äußere Umfangsfläche der Anschlussbuchse (26, 28) im Querschnitt gesehen eine von einer rotationssymmetrischen Fläche abweichende Form aufweist.

10. Bremszylinder nach einem der vorhergehenden Ansprüche, **dadurch gekennzeichnet, dass** eine äußere Umfangsfläche der Anschlussbuchse (26, 28) mit Ausnahme der Durchgangsöffnung (32) vollständig in der Gehäusewandung (36) eingespritzt ist.

11. Bremszylinder nach einem der vorhergehenden Ansprüche, **dadurch gekennzeichnet, dass** die Durchgangsöffnung (32) der Anschlussbuchse (26, 28) zum Be- und/oder Entlüften einer Bremskammer (16) im Inneren des Bremszylinders (1) dient.

12. Verfahren zur Herstellung eines als pneumatischer Bremszylinder ausgebildeten Druckmittelaggregats (1) mit einem Gehäuse (2, 4), in dessen Gehäusewandung (36) mindestens eine Anschlussbuchse (26, 28) mit einer Durchgangsöffnung (32) befestigt ist, durch welche eine Zu- und/oder Abfuhr von Druckmittel in oder aus dem Inneren (16) des Gehäuses (2, 4) erfolgt, wobei die Anschlussbuchse (26, 28) aus wenigstens einem Metall besteht, und wobei die Anschlussbuchse (26, 28) zur lösbaren Befestigung eines das Druckmittel führenden Anschlussstutzens (30) einer Schlauch - oder Rohrleitung ausgebildet ist, beinhaltend wenigstens den Schritt des Spritzgießens des Gehäuses (2, 4) aus Kunststoff in einem Spritzgusswerkzeug, **dadurch gekennzeichnet, dass** die mindestens eine Anschlussbuchse (26, 28) in dem Spritzgusswerkzeug an der für sie vorgesehenen Stelle positioniert und beim nachfolgenden Spritzgießen des Gehäuses (2, 4) die mindestens eine Anschlussbuchse (26, 28) in einem einzigen Arbeitsschritt mit Ausnahme der Durchgangsöffnung (32) zumindest teilweise in die Gehäusewandung (36) eingespritzt wird.

## Claims

1. Pressure medium assembly which is configured as a pneumatic brake cylinder, having a housing (2, 4) which is made from plastic, is manufactured by way of injection molding, and in the housing wall (36) of which at least one connector socket (26, 28) with a through opening (32) is fastened, through which through opening (32) a feed and/or discharge of pressure medium into or out of the interior (16) of the housing (2, 4) takes place, wherein the connector socket (26, 28) consists of at least one metal, and wherein the connector socket (26, 28) is configured for releasably fastening a connector stub (30) of a hose or pipe line, which connector stub (30) conducts the pressure medium, **characterized in that** the connector socket (26, 28), with the exception of the through opening (32), is molded at least partially into the housing wall (36) in a single work step during the injection molding of the housing (2, 4).

2. Brake cylinder according to Claim 1, **characterized in that** the connector socket (26, 28) is configured in the manner of a push-in fitting for releasably fastening the connector stub (30) which conducts the pressure medium.

3. Brake cylinder according to Claim 1 or 2, **characterized in that** at least one seal element (56) is arranged between a radially outwardly protruding collar (54) of the connector stub (30) and an outer face (48) of the housing wall (36) or an end face of the connector socket (26, 28).

4. Brake cylinder according to one of the preceding claims, **characterized in that** the connector socket (26) has a sleeve part (38) and a collar part (40) which protrudes radially outwardly away from the sleeve part (38), at least the collar part (40) being molded completely into the housing wall (36).

5. Brake cylinder according to Claim 4, **characterized in that**, for the purpose of an anti-rotation safeguard of the connector socket (26) with respect to the housing wall (36), the collar part (40) has a radially outer circumferential face which differs from a rotationally symmetrical face.

6. Brake cylinder according to Claim 5, **characterized in that**, for the purpose of an anti-rotation safeguard of the connector socket (26) with respect to the housing wall (36), the collar part (40) has a radially outer circumferential face which is polygonal as viewed in cross section.

7. Brake cylinder according to one of Claims 4 to 6, **characterized in that**, for the purpose of an anti-rotation safeguard of the connector socket (26) with respect to the housing wall (36), the collar part (40) has at least one transversely running through opening (50) which is penetrated by the material of the housing wall (36).

8. Brake cylinder according to one of Claims 4 to 7, **characterized in that** the sleeve part (38) extends substantially from an inner face (46) as far as an outer face (48) of the housing wall (36).

9. Brake cylinder according to one of the preceding claims, **characterized in that**, for the purpose of an anti-rotation safeguard of the connector socket (26, 28) with respect to the housing wall (36), a radially outer circumferential face of the connector socket (26, 28) has, as viewed in cross section, a shape which differs from a rotationally symmetrical face.

10. Brake cylinder according to one of the preceding claims, **characterized in that** an outer circumferential face of the connector socket (26, 28) is molded completely in the housing wall (36), with the exception of the through opening (32).

11. Brake cylinder according to one of the preceding claims, **characterized in that** the through opening (32) of the connector socket (26, 28) serves to fill and/or vent a brake chamber (16) in the interior of the brake cylinder (1).

12. Method for producing a pressure medium assembly (1) which is configured as a pneumatic brake cylinder, having a housing (2, 4), in the housing wall (36) of which at least one connector socket (26, 28) with a through opening (32) is fastened, through which through opening (32) a feed and/or discharge of pressure medium into or out of the interior (16) of the housing (2, 4) takes place, wherein the connector socket (26, 28) consists of at least one metal, and wherein the connector socket (26, 28) is configured for releasably fastening a connector stub (30) of a hose or pipe line, which connector stub (30) conducts the pressure medium, comprising at least the step of injection molding the housing (2, 4) from plastic in an injection molding die, **characterized in that** the at least one connector socket (26, 28) is positioned in the injection molding die at the point which is provided for it and, during the subsequent injection molding of the housing (2, 4), the at least one connector socket (26, 28) is molded at least partially into the housing wall (36) in a single work step with the exception of the through opening (32).

## Revendications

1. Groupe à fluide sous pression, constitué sous la forme d'un cylindre de frein pneumatique, comprenant une enveloppe (2, 4) en matière plastique, qui est fabriquée par moulage par injection, dans la paroi (36) de laquelle est fixée au moins un manchon (26, 28) de raccordement, ayant une ouverture (32) de passage, qui effectue un apport de fluide sous pression à l'intérieur (16) de l'enveloppe (2, 4) et/ou une évacuation de fluide sous pression de l'intérieur (16) de l'enveloppe (2, 4), le manchon (26, 28) de raccordement étant en au moins un métal et le manchon (26, 28) de raccordement étant constitué pour la fixation amovible d'une tubulure (30) de raccordement, conduisant le fluide sous pression, d'un conduit souple ou d'un tuyau, **caractérisé en ce que**, dans un stade de travail unique, lors du moulage par injection de l'enveloppe (2, 4), le manchon (26, 28) de raccordement est, à l'exception de l'ouverture (32) de passage, moulé par injection, au moins en partie, dans la paroi (36) de l'enveloppe.

2. Cylindre de frein suivant la revendication 1, **caractérisé en ce que** le manchon (26, 28) de raccordement est constitué pour la fixation amovible de la tubulure (30) de raccordement, conduisant le fluide sous pression, à la manière d'un push-in-fitting.

3. Cylindre de frein suivant la revendication 1 ou 2, **caractérisé en ce qu'**au moins un élément (56) d'étanchéité est disposé entre un collet (54) faisant saillie vers l'extérieur radialement de la tubulure (30) de raccordement et une surface (48) extérieure de la paroi (36) de l'enveloppe ou une surface frontale du manchon (26, 28) de raccordement.

4. Cylindre de frein suivant l'une des revendications précédentes, **caractérisé en ce que** le manchon (26) de raccordement a une partie (38) de douille et une partie (40) de collet faisant saillie en s'éloignant vers l'extérieur radialement de la partie (38) de douille, au moins la partie (40) de collet étant incorporée complètement par moulage dans la paroi (36) de l'enveloppe.

5. Cylindre de frein suivant la revendication 4, **caractérisé en ce qu'**en vue d'empêcher le manchon (26) de raccordement de tourner, par rapport à la paroi (36) de l'enveloppe, la partie (40) de collet a une surface périphérique extérieure radialement se distinguant d'une surface de révolution.

6. Cylindre de frein suivant la revendication 5, **caractérisé en ce qu'**en vue d'empêcher le manchon (26) de raccordement de tourner, par rapport à la paroi (36) de l'enveloppe, la partie (40) de collet a une surface périphérique extérieure radialement polygonale, considéré en section transversale.

7. Cylindre de frein suivant l'une des revendications 4 à 6, **caractérisé en ce qu'**en vue d'empêcher le manchon (26) de raccordement de tourner, par rapport à la paroi (36) de l'enveloppe, la partie (40) de collet a au moins une ouverture (50) de passage, qui s'étend transversalement et qui est traversée par le matériau de la paroi (36) de l'enveloppe.

8. Cylindre de frein suivant l'une des revendications 4 à 7, **caractérisé en ce que** la partie (38) de douille s'étend sensiblement d'une surface (46) intérieure à une surface (48) extérieure de la paroi (36) de l'enveloppe.

9. Cylindre de frein suivant l'une des revendications précédentes, **caractérisé en ce qu'**en vue d'empêcher le manchon (26, 28) de raccordement de tourner, par rapport à la paroi (36) de l'enveloppe, une surface périphérique extérieure radialement du manchon (26, 28) de raccordement a, considéré en section transversale, une forme se distinguant d'une surface de révolution.

10. Cylindre de frein suivant l'une des revendications précédentes, **caractérisé en ce qu'**une surface périphérique extérieure du manchon (26, 28) de raccordement est, à l'exception de l'ouverture (32) de passage, incorporée complètement par moulage dans la paroi (36) de l'enveloppe.

11. Cylindre de frein suivant l'une des revendications précédentes, **caractérisé en ce que** l'ouverture (32) de passage du manchon (26, 28) de raccordement sert à alimenter en air et/ou à purger une chambre (16) de frein à l'intérieur du cylindre (1) de frein.

12. Procédé de fabrication d'un groupe (1) à fluide sous pression, constitué sous la forme d'un cylindre de frein pneumatique, comprenant une enveloppe (2, 4) en matière plastique, qui est fabriquée par moulage par injection, dans la paroi (36) de laquelle est fixée au moins un manchon (26, 28) de raccordement, ayant une ouverture (32) de passage, qui effectue un apport de fluide sous pression à l'intérieur (16) de l'enveloppe (2, 4) et/ou une évacuation de fluide sous pression de l'intérieur (16) de l'enveloppe (2, 4), le manchon (26, 28) de raccordement étant en au moins un métal et le manchon (26, 28) de raccordement étant constitué pour la fixation amovible d'une tubulure (30) de raccordement, conduisant le fluide sous pression d'un conduit souple ou d'un tuyau, comportant au moins le stade de moulage par injection de l'enveloppe (2, 4) en une matière plastique dans un outil de moulage par injection, **caractérisé en ce que** l'on met le au moins un manchon (26, 28) de raccordement en position dans l'outil de moulage par injection, en le point qui est prévu pour lui, et, lors du moulage par injection venant ensuite de l'enveloppe (2, 4), dans un stade de travail unique, on incorpore par moulage par injection le au moins un manchon (26, 28) de raccordement, à l'exception de l'ouverture (32) de passage, au moins en partie, dans la paroi (36) de l'enveloppe.
